# EUROPÄISCHE PATENTANMELDUNG

(11) **EP 0 818 679 A2**
(43) Veröffentlichungstag der Anmeldung: **14.01.1998**
(21) Anmeldenummer: 97111593.6
(22) Anmeldetag: 09.07.1997
(51) Int. Cl.: G01N 29/24, G01N 29/04

(54) **Ultraschallwinkelprüfkopf und Verfahren zum Betreiben des Winkelprüfkopfes**

(30) Priorität: 11.07.1996 DE 19627957
(71) Anmelder: ABB Reaktor GmbH, D-68167 Mannheim (DE)
(72) Erfinder: Bonitz, Frank, 66539 Neunkirchen (DE)
(74) Vertreter: Rupprecht, Klaus, Dipl.-Ing.

(57) **Zusammenfassung**

Soll ein mit einem Vorlaufkeil ausgestatteter Winkelprüfkopf (6) in einen Spalt eingefahren werden, so sind mit der Aufbauhöhe des Prüfkopfes Grenzen gesetzt, die eine Prüfung ab einer bestimmten Spaltbreite ausschließen. Zur Schaffung eines Winkelprüfkopfes, dessen Prüfempfindlichkeit auch bei reduzierter Aufbauhöhe erhaltenbleibt, wird ein Winkelprüfkopf vorgesehen, der wenigstens zwei Vorlaufkeile (1, 2) umfaßt. Zum Beeinflussen der Laufzeit des Schalles sind Mittel vorgesehen, die dem Impulsgeber, dem Schallauswerter oder einem Verbindungselement zu einem Schallwandler zugeordnet sein können.

## Beschreibung

Die Erfindung betrifft einen Ultraschallwinkelprüfkopf mit einem Vorlaufkeil, der auf seiner Keilfläche wenigstens einen Schallwandler trägt, der mit einem Impulsgeber und/oder einem Schallauswerter verbunden ist.

Ein derartiger Winkelprüfkopf ist aus Seite 238 des Buches 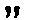 Werkstoffprüfung mit Ultraschall" von J. und H. Krautkrämer, 3. Auflage 1975, bekannt. Neben der dargestellten Impuls/Echo-Methode kann ein derartiger Winkelprüfkopf auch im Sende/Empfangs-Betrieb arbeiten, wobei der Keilfläche je ein separater Schallwandler für das Senden und das Empfangen von Schallwellen zugeordnet ist.

Bei Schallwandlern derartiger Winkelprüfköpfe ist zur Erzielung einer bestimmten Schallfeldstruktur eine bestimmte Größe erforderlich, die sich in der Aufbauhöhe des Winkelprüfkopfes ausdrückt. Soll der Winkelprüfkopf in einem Spalt eingesetzt werden, so sind mit der Aufbauhöhe Grenzen gesetzt, die eine Prüfung ab einer bestimmten Spaltbreite ausschließen. Eine Verringerung der Aufbauhöhe würde mit einer Verkleinerung des Schallwandlers und somit mit einer reduzierten Prüfempfindlichkeit einhergehen.

Es stellt sich die Aufgabe, einen Winkelprüfkopf der eingangsgenannten Art anzugeben, dessen Prüfempfindlichkeit auch bei reduzierter Aufbauhöhe erhaltenbleibt.

Gelöst wird diese Aufgabe erfindungsgemäß dadurch, daß der Winkelprüfkopf wenigstens zwei Vorlaufkeile umfaßt, und daß Mittel zum Beeinflussen der Laufzeit des Schalls außerhalb des Prüflings vorgesehen sind.

Mit der Doppelkeilanordnung gelingt eine erhebliche Steigerung der Prüfempfindlichkeit, obwohl die Aufbauhöhe niedriger gehalten werden kann, als wenn die gleiche Prüfempfindlichkeit mit einem einzigen Vorlaufkeil erzielt werden soll. Durch eine entsprechende Beinflussung der Laufzeit der außerhalb des Prüflings verlaufenden Impulse oder Schallwellen wird im Material des Prüflings eine synchrone Schallwelle aus den Schallwellen der einzelnen Schallwandler erzeugt. Die Schallamplituden addieren sich also zu einer größeren Gesamtamplitude und führen zu einer Erhöhung der Prüfempfindlichkeit. Auch die aus dem Prüfling zurücklaufenden Schallwellen erhalten eine Beinflussung, in dem sie vor Erreichen des Schallauswerters derart verzögert werden, daß eine Addierung der einzelnen Signale erfolgen kann.

Die Mittel zur Beeinflussung der Laufzeit des Schalles können dem Schallerreger, dem Schallauswerter oder einem Verbindungselement zum Schallwandler zugeordnet sein.

Vorzugsweise sind die Vorlaufkeile als ein Doppelkeil in Einschallrichtung betrachtet hintereinander angeordnet.

Ein Verfahren zum Betreiben eines derartigen Winkelprüfkopfes zeichnet sich dadurch aus, daß beim Beschallen zuerst ein Sendeimpuls von dem in Einschallrichtung betrachtet hinteren Schallwandler abgesetzt wird, daß nach einer vorgebbaren Zeitspanne von dem in Einschallrichtung vorderen Schallwandler ein Sendeimpuls abgesetzt wird, und daß der vom Prüfling zum Schallauswerter laufende Empfangsimpuls in Abhängigkeit des Einschallwinkels verzögert wird.

Die Verzögerung des Sendeimpulses erfolgt in einem bestimmten Zeitversatz, der zu einem synchronen Verlauf der vom einzelnen Erreger kommenden Schallwellen mit gleicher Phasenlage führt.

Nach einem anderen Verfahrensablauf werden beim Beschallen die Sendeimpulse der einzelnen Ultraschallwandler gleichzeitig abgesetzt, wobei die Laufzeiten ein vorgebbares Maß gegeneinander verzögert werden und der vom Prüfling zum Schallauswerter laufende Empfangsimpuls in Abhängigkeit des Einschallwinkels verzögert wird.

Die Verzögerung der vom Schallerreger ausgehenden Schallwellen erfolgt hier auf dem Weg vom Schallerreger zum Schallwandler. Bei beiden Verfahren ist der Grad der Verzögerung vom Einschallwinkel abhängig.

Anhand von Ausführungsbeispielen und der schematischen Figuren 1 bis 8 wird der erfindungsgemäße Winkelprüfkopf und ein Verfahren zum Betreiben eines derartigen Winkelprüfkopfes beschrieben. Es zeigt:
- Fig. 1: einen Querschnitt durch eine in Reihe angeordnete Vorlaufkeilanordnung,
- Fig. 2: eine Ansicht in Pfeilrichtung II nach der Fig. 1 mit jeweils einem Schallwandler pro Vorlaufkeil,
- Fig. 3: eine Ansicht gemäß Fig. 2 mit jeweils zwei Schallwandlern pro Vorlaufkeil,
- Fig. 4: einen Schnitt entlang der Linie IV - IV der Fig. 3,
- Fig. 5: eine Schaltungsanordnung zur Steuerung eines Winkelprüfkopfes,
- Fig. 6 + 7: Zeitdiagramme zur Beeinflussung der Schallaufzeit,
- Fig. 8: eine Darstellung des Schallwellenverlaufs in einem Prüfling.

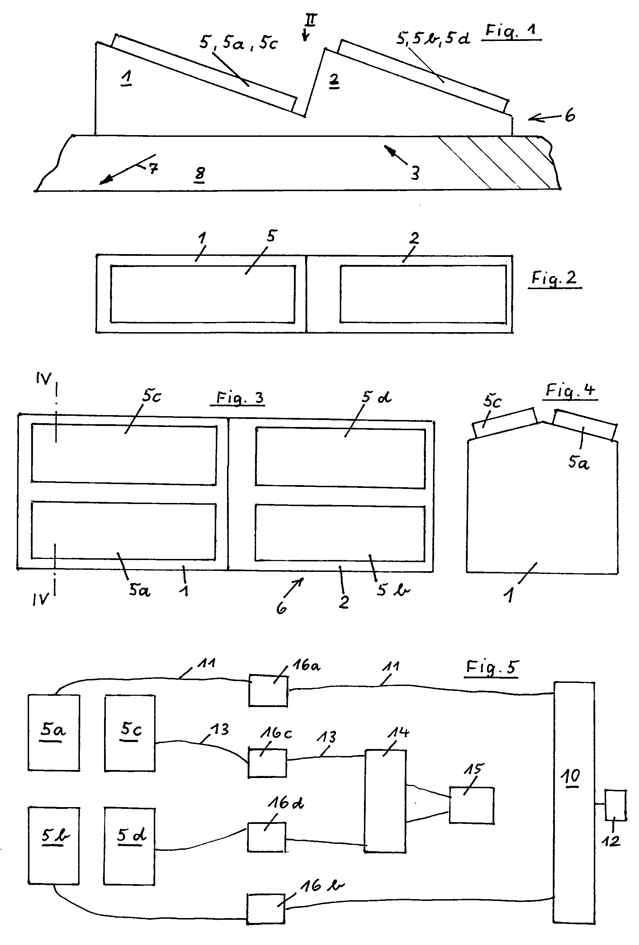

Die Fig. 1 zeigt einen Querschnitt durch eine Anordnung aus zwei in Reihe angeordneten Vorlaufkeilen 1, 2, die zu einem Doppelkeil 3 zusammengefaßt sind. Jeder Vorlaufkeil trägt auf seiner Keilfläche 4 gemäß Fig. 2 für den Impuls/Echo-Betrieb einen Schallwandler 5 und gemäß Fig. 3 für den Sende/Empfänger-Betrieb je zwei Schallwandler 5a, 5b, 5c und 5d. Wie der Querschnitt nach Fig. 4 zeigt, sind die Keilflächen dachförmig geneigt. Eine Anordnung aus dem Doppelkeil und den Schallwandlern bilden einen Winkelprüfkopf 6. Mit einem Pfeil 7 ist die Einschallrichtung in einen Prüfling 8 angedeutet, der von einer Ankoppelfläche 9 des Winkelprüfkopfes kontaktiert wird.

In dem Ausführungsbeispiel nach Fig. 3, 4 und 5 sind die als Sender ausgebildeten Schallwandler 5a und 5b unter Zwischenschaltung eines Verteilers 10 über eine Leitung 11 mit einem Impulsgeber 12 verbunden. Die als Empfänger der aus dem Prüfling zurückkehrenden Signale dienenden Schallwandler 5c und 5d sind über je eine Leitung 13 unter Zwischenschaltung einer Zusammenführungseinheit 14 mit einem Schallauswerter 15 verbunden. Jeder vom Verteiler 10 zu den Schallwandlern 5a und 5b führenden Leitung 11 ist mit einem Verzögerungselement 16a und 16b zum Beeinflussen der Laufzeit der Sendeimpulse bestückt. Ferner weist jede von dem Schallwandlern 5c und 5d zu der Zusammenführungseinheit 14 führenden Leitung 13 ebenfalls eine Verzögerungseinheit 16c und 16d auf, die zum Beeinflussen der Laufzeit der vom Prüfling 8 zurückkehrenden Signale dient.

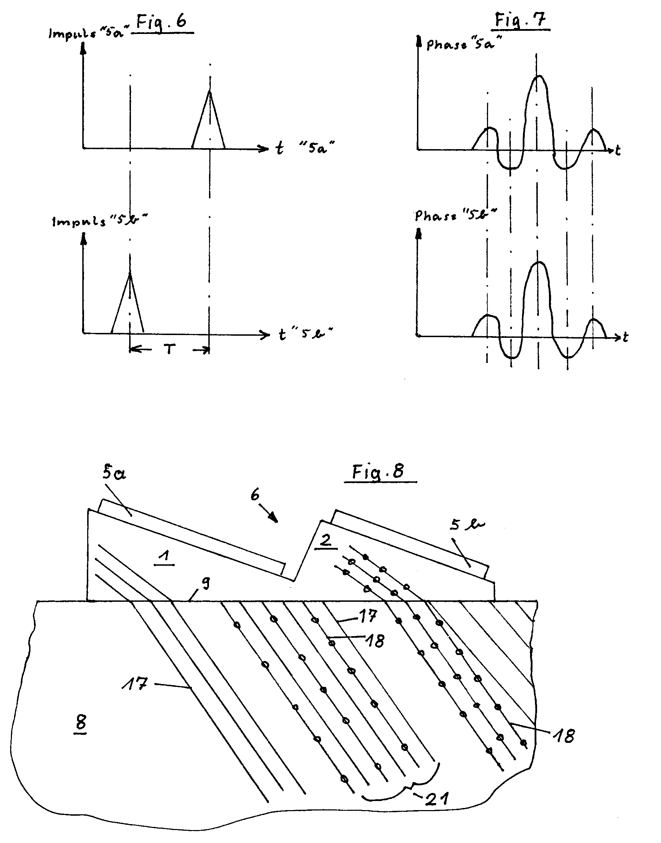

Anhand der Fig. 6, 7 und 8 wird die Funktion des Winkelprüfkopfes und das Verfahren zum Betreiben des Prüfkopfes beschrieben. Bei einer Winkelprüfkopfausbildung gemäß Fig. 3 wird der vom Verteiler 10 gleichzeitig ausgehende Sendeimpuls im Verzögerungselement 16b verzögert und bei ausgeschalteten Verzögerungselement 16a ohne Verzögerung zum in Einschallrichtung betrachtet vorne liegenden Schallwandler 5a geleitet. Wie aus dem Zeitdiagramm der Fig. 6 ersichtlich ist, ergibt sich dadurch eine Verzögerung um den Wert T des in Einschallrichtung hinten gelegenen Schallwandlers 5b. Bei richtiger Wahl der Zeitdifferenz T bildet sich eine im mittlerem Bereich der Fig. 8 symbolisierte syncrone Schallwellenfront 21 aus den Schallwellen 17 und 18 der Schallwandler 5a und 5b. Die gleiche Phasenlage der beiden zu einer Schallwellenfront 21 synchronisierten Schallwellen 17, 18 ist aus dem Zeitdiagramm der Fig. 7 ersichtlich. Auf Grund der Zeitverzögerung addieren sich die Schallamplituden zu einer größeren Gesamtamplitude, so daß die Prüfempfindlichkeit wesentlich größer ausfällt als bei einem einzelnen Schallwandler in einem Winkelprüfkopf gleicher Aufbauhöhe. Die in Fig. 6 gezeigte Zeitverzögerung des Sendeimpulses läßt sich bei fehlenden Verzögerungselementen 16a und 16b auch durch ein zeitverzögertes Abgeben der Sendeimpulse aus dem Verteiler 10 erzielen. Würden die Schallwander 5a und 5b gleichzeitig mit einem Impuls beaufschlagt, so würden die Schallwellen 17 und 18, wie symbolisch in den Außenbereichen der Fig. 8 angedeutet, im Prüfling 8 zeitlich getrennt verlaufen und sich demnach wie zwei Einzelschallwandler verhalten. Erst durch die erfindungsgemäße Verzögerung der Schallimpulse wird der angestrebte Erfolg erzielt.

Die beispielsweise von einem Reflektor (Materialfehler) zurücklaufenden Schallwellen erreichen den Empfänger 5c früher als 5d. Durch entsprechende Steuerung der Verzögerung in den Verzögerungselementen 16c und 16d ist die Addierung der Signale in der Zusammenführungseinheit 14 möglich.

## Patentansprüche

1. Ultraschallwinkelprüfkopf (6) mit einem Vorlaufkeil (1, 2), der auf seiner Keilfläche (4) wenigstens einen Schallwandler (5, 5a, 5b, 5c, 5d) trägt, der mit einem Impulsgeber (12) und/oder einem Schallauswerter (15) verbunden ist, dadurch gekennzeichnet, daß der Winkelprüfkopf (6) wenigstens zwei Vorlaufkeile (1, 2) umfaßt, und daß Mittel zum Beeinflussen der Laufzeit des Schalles außerhalb eines Prüflings (8) vorgesehen sind.

2. Ultraschallwinkelprüfkopf nach Anspruch 1, dadurch gekennzeichnet, daß die Mittel dem Impulsgeber (12), dem Schallauswerter (15) oder einem Verbindungselement zum Schallwandler (5, 5a, 5b, 5c, 5d) zugeordnet sind.

3. Ultraschallwinkelprüfkopf nach Anspruch 1 oder 2, dadurch gekennzeichnet, daß die Vorlaufkeile in Einschallrichtung betrachtet hintereinander angeordnet sind.

4. Ultraschallwinkelprüfkopf nach Anspruch 1 bis 3, dadurch gekennzeichnet, daß beim Arbeiten nach der Impuls/Echo-Methode jeder Vorlaufkeil einen Schallwandler (5) trägt.

5. Ultraschallwinkelprüfkopf nach Anspruch 1 bis 3, dadurch gekennzeichnet, daß nach der Sende/Empfänger-Methode jeder Vorlaufkeil zwei Schallwandler (5a, 5b) oder (5c, 5d) trägt.

6. Verfahren zum Betrieb eines Ultraschallwinkelprüfkopfes nach Anspruch 1, dadurch gekennzeichnet, daß beim Beschallen zuerst eine Sendeimpuls von dem in Einschallrichtung betrachtet hinteren Schallwandler (5b) abgesetzt wird, daß nach einer vorgebbaren Zeitspanne von dem in Einschallrichtung vorderen Schallwandler (5a) ein Sendeimpuls abgesetzt wird und daß der vom Prüfling (8) zum Schallauswerter (15) laufende Empfangsimpuls in Abhängigkeit des Einschallwinkels verzögert wird.

7. Verfahren zum Betrieb eines Ultraschallwinkelprüfkopfes nach Anspruch 1, dadurch gekennzeichnet, daß beim Beschallen die Sendeimpulse der einzelnen Schallwandler gleichzeitig abgesetzt werden, daß die Laufzeiten ein vorgebbares Maß gegeneinander verzögert werden und daß der vom Prüfling (8) zum Schallauswerter (15) laufende Empfangsimpuls in Abhängigkeit des Einschallwinkels verzögert wird.
